# EUROPÄISCHE PATENTSCHRIFT

(11) **EP 0 759 515 B1**
(45) Veröffentlichungstag und Bekanntmachung des Hinweises auf die Patenterteilung: **05.09.2001**
(21) Anmeldenummer: 96110602.8
(22) Anmeldetag: 01.07.1996
(51) Int. Cl.: F16D 48/08, B60K 41/02

(54) **Steuerung einer automatischen Kupplung bei Anfahrsituationen**
Automatic clutch control during vehicle start
Régulation d'un embrayage automatique pendant la phase de démarrage

(30) Priorität: 21.08.1995 DE 19530611
(43) Veröffentlichungstag der Anmeldung: 26.02.1997
(73) Patentinhaber: DaimlerChrysler AG, 70567 Stuttgart (DE)
(72) Erfinder: Kosik, Franz, 73760 Ostfildern (DE); Wörner, Günter, 71394 Kernen (DE)

(56) Entgegenhaltungen:
- WO-A-89/03318
- DE-A- 4 426 260
- GB-A- 2 080 910
- US-A- 5 184 301

## Beschreibung

Die Erfindung betrifft eine automatisch gesteuerte Kupplung zwischen einem mittels willkürlich betätigbaren Steuerorgans steuerbaren Motor und einem ein schaltbares Getriebe aufweisenden Antriebstrang eines Kraftfahrzeuges, mit einer Steuerung, die die Kupplung bei Anfahrsituationen bei vorgegebenen Betriebsparametern weitestgehend öffnet, wobei die Kupplung bei einem zumindest angenäherten Stillstand des Fahrzeuges und Einschaltung eines zum Anfahren geeigneten Ganges bzw. einer anfahrgeeigneten Stufe des Getriebes und nicht betätigter Fahrzeugbremse automatisch zur Übertragung eines geringen, ein Kriechen des Fahrzeuges bewirkenden Drehmomentes schwach geschlossen und bei verstärkter Betätigung des Steuerorgans des Motor stärker bzw. vollständig geschlossen, jedoch bei einem in der Anfahrsituation auftretenden Rückhub des Steuerorgans des Motors sofort vollständig bzw. nahezu vollständig ausgekuppelt wird.

Kraftfahrzeuge mit manuell geschalteten Getrieben und automatisch betätigter Kupplung sind allgemein bekannt und werden serienmäßig ausgeliefert.

Die DE 44 26 260 A1 zeigt eine Kupplung der eingangs angegebenen Art. Dadurch soll die Steuerung der Kupplung bei kritischen Anfahrsituationen, insbesondere wenn der Fahrer den Anfahrvorgang abbrechen will, verbessert werden.

Ganz allgemein sollen automatische Kupplungen gemäß der Druckschrift "Microprocessor Clutch Control", SAE-Paper 830628 (1987) weitestgehend in einer Weise automatisch betätigt werden, welche einer optimalen Betätigung einer willkürlich betätigbaren Kupplung durch den Fahrer nahekommt. Dazu wird gemäß dieser Druckschrift in einer Anfahrsituation bei betätigtem Steuerorgan (Fahrpedal) des Motors das Kupplungsmoment in Abhängigkeit von verschiedenen Parametern, insbesondere in Abhängigkeit von den eingangsseitigen und ausgangsseitigen Drehzahlen des Getriebes gesteuert. Außerdem ist eine Sensorik vorgesehen, die erkennen läßt, ob der Fahrer im Verlauf einer Anfahrsituation das Fahrpedal abrupt freigibt. In einem solchen Falle wird die Kupplung geöffnet.

Aus der EP 0 153 051 A1 ist ein Kraftfahrzeug bekannt, welches mit einer automatisch arbeitenden Kupplung und einem mechanischen Getriebe ausgerüstet ist, dessen Übersetzung stufenlos veränderbar ist:. Bei nicht betätigtem Fahrpedal wird die automatische Kupplung in Abhängigkeit von der Fahrgeschwindigkeit gesteuert, wobei die Kupplung oberhalb eines oberen Schwellwertes der Geschwindigkeit ständig geschlossen bleibt, in einem Bereich zwischen einem unteren Schwellwert der Geschwindigkeit und dem vorgenannten oberen Schwellwert geöffnet ist und unterhalb des unteren Schwellwertes ganz schwach geschlossen wird, derart, daß das von der Kupplung übertragene Moment gerade ausreicht, die Reibung des Getriebes zu kompensieren. Sobald das Fahrpedal betätigt wird, arbeitet die Kupplung unterhalb des oberen Schwellwertes der Geschwindigkeit in Abhängigkeit von der Fahrgeschwindigkeit sowie der Stellung des Fahrpedales. Oberhalb des oberen Schwellwertes ist dabei die Kupplung in jedem Fall geschlossen. Durch die vollständige Öffnung der Kupplung bei unbetätigtem Fahrpedal im Geschwindigkeitsbereich zwischen den beiden vorgenannten Schwellwerten soll vermieden werden, daß der Motor innerhalb dieses Geschwindigkeitsbereiches "abgewürgt" werden kann. Sobald nämlich bei einem Fahrzeug mit stufenlos arbeitendem Getriebe der Stellhub des Fahrpedales zurückgenommen wird, ändert sich die Getriebeübersetzung derart, daß sich die Motordrehzahl bei gleichbleibender Fahrgeschwindigkeit zunehmend vermindert. Dies kann bei. unbetätigtem Fahrpedal und geschlossen bleibender Kupplung dazu führen, daß der Motor bei Geschwindigkeiten unterhalb des oberen Schwellwertes in einen Drehzahlbereich gedrängt wird, innerhalb dessen ein stabiler Lauf des Motors nicht mehr gewährleistet und dementsprechend ein "Abwürgen" des Motors zu erwarten ist.

Aus der DE 34 30 983 A1 ist es bekannt, daß die Kupplung nur bei Unterschreitung eines geringen Schwellwertes der Fahrgeschwindigkeit vollständig zu öffnen vermag.

Bei allen bekannten automatischen Kupplungen wird der Fall eines Abbruches eines Anfahrvorganges noch nicht in wünschenswerter Weise berücksichtigt. Sollte nämlich der Fahrer während einer Anfahrsituation die Fahrgeschwindigkeit vermindern müssen, so kann das Fahrzeug noch vergleichsweise stark vorgetrieben werden.

Deshalb ist es Aufgabe der Erfindung, eine neue Kupplungssteuerung zu schaffen, welche bei gefährlichen Situationen während der Anfahrphase eine deutlich erhöhte Sicherheit bietet.

Diese Aufgabe wird erfindungsgemäß dadurch gelöst, daß nach einem in der Anfahrsituation aufgetretenen Rückhub des Steuerorgans des Motors die Kupplung erst nach vorgebbarer kurzer Verzögerungszeit wieder in Anpassung an die jeweilige Fahrsituation gesteuert wird.

Die Erfindung beruht auf dem allgemeinen Gedanken, bei einem möglichen Abbruch eines Anfahrmanövers durch den Fahrer die Kupplung automatisch für eine Verzögerungszeit zu öffnen, um ein eventuell nachfolgendes Bremsmanöver soweit als möglich zu unterstützen bzw. eine eventuell für den Fahrer unerwartete Beschleunigung des Fahrzeuges zu verhindern. Dabei wird die Tatsache ausgenutzt, daß ein Rückhub des Leistungssteuerorgans - z.B. Fahrpedal oder Drosselklappe des Motors - während einer Anfahrphase mit hoher Wahrscheinlichkeit darauf hindeutet, daß der Fahrer den Anfahrvorgang abbrechen will.

Um einen unerwünschten Freilauf des Fahrzeuges sicher zu vermeiden, kann gemäß einer bevorzugten Ausführungsform der Erfindung vorgesehen sein., daß die automatische Kupplung erst unterhalb eines geringen Schwellwertes der Fahrgeschwindigkeit vollständig zu öffnen vermag.

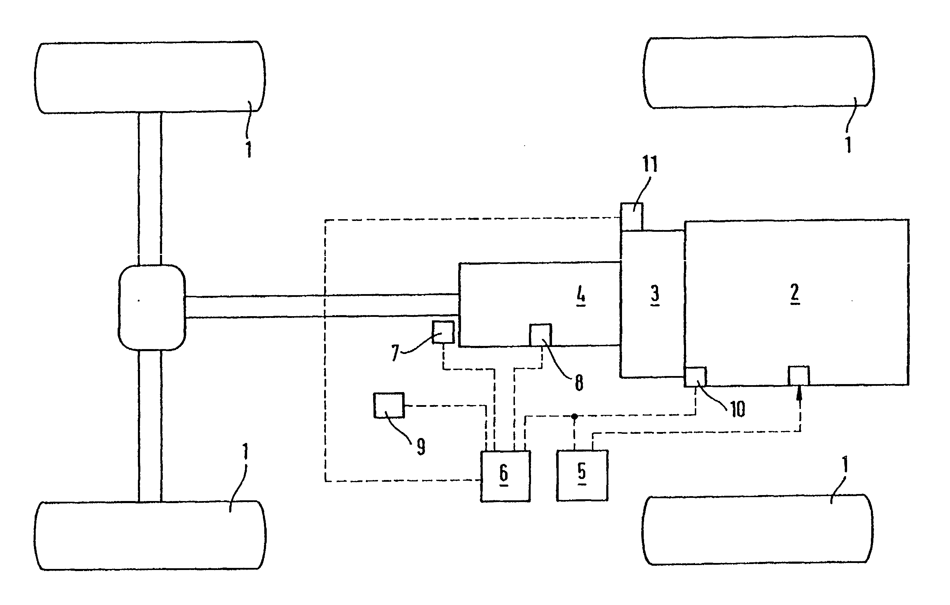

Im übrigen wird hinsichtlich bevorzugter Merkmale der Erfindung auf die Ansprüche sowie die nachfolgende Erläuterung der Zeichnung verwiesen, anhand der bevorzugte Ausführungsformen der Erfindung beschrieben werden.

Dabei zeigt die einzige Figur in schematisierter Draufsicht ein Kraftfahrzeug mit erfindungsgemäßer Kupplungssteuerung.

Von dem Kraftfahrzeug sind im wesentlichen nur die vorderen und hinteren Räder 1 dargestellt, wobei im gezeigten Beispiel die Hinterräder vom Fahrzeugmotor 2 über eine automatisch betätigte Kupplung 3 und ein manuell geschaltetes Getriebe 4 angetrieben werden.

Der Motor 2 besitzt eine automatische Motorregelung 5, die in grundsätzlich bekannter Weise arbeitet und zumindest dafür sorgt, daß die Ist-Betriebsdrehzahl des Motors 2 auch bei größerer Belastung des Motors nicht ohne weiteres unter eine Mindestsolldrehzahl - in der Regel die Leerlaufsolldrehzahl des Motors - abfallen kann. Des weiteren ist für die Kupplung 3 eine Regelschaltung 6 vorgesehen, die gegebenenfalls mit der Motorregelung 5 zu einer einzigen Regeleinheit zusammengefaßt sein kann.

Eingangsseitig ist die Regelschaltung 6 mit einem Sensor 7 für die Fahrgeschwindigkeit, z.B. einem Tachometer des Fahrzeuges, verbunden. Die Signale eines weiteren, an die Eingangsseite der Regelschaltung 6 angeschlossenenen Sensors 8 zeigen die eingelegte Getriebestufe bzw. den eingelegten Gang an. Ein weiterer Sensor 9 erfaßt die Betätigung einer Fahrzeugbremse (nicht dargestellt). Durch einen Sensor 10 "kennt" die Regelschaltung 6 die Stellung eines die Leistung des Motors 2 steuernden Organs, beispielsweise eines vom Fahrer mit dem Fuß betätigten Fahrpedals oder einer damit antriebsgekoppelten Drosselklappe.

Ausgangsseitig ist die Regelschaltung 6 mit einem die Kupplung betätigenden, vorzugsweise elektrischen Stellmotor 11 verbunden.

Sobald die Regelschaltung 6 eine Anfahrsituation erkennt, etwa wenn der Sensor 7 einen Stillstand bzw. einen angenäherten Stillstand des Fahrzeuges, der Sensor 8 die Einschaltung eines zum Anfahren geeigneten Ganges bzw. einer anfahrgeeigneten Stufe des Getriebes 4 und der Sensor 9 eine nicht betätigte Fahrzeugbremse melden, wird die Kupplung 3 durch entsprechende Steuerung des Stellmotors 11 so betätigt, daß sie nur ein geringes, ein Kriechen des Fahrzeuges bewirkendes Drehmoment zu übertragen vermag.

Wenn dann die Leistung des Motors 2 erhöht bzw. das vom Sensor 10 überwachte Leistungssteuerorgan des Motors 2 im Sinne einer Leistungserhöhung betätigt wird, und/oder wenn sich die vom Sensor 7 überwachte Fahrgeschwindigkeit erhöht, wird die Kupplung 3 zunehmend bzw. schließlich weitestgehend vollständig geschlossen.

Sollte nun der Fahrer während des Anfahrvorganges das Leistungssteuerorgan des Motors, in der Regel das Fahrpedal bzw. die damit antriebsverbundene Drosselklappe, zurücksteuern, so wird dies von der Regelschaltung 6 als "Wunsch zum Abbruch des Anfahrvorganges" gedeutet, zumindest dann, wenn die Rücksteuerung des Leistungssteuerorgans mit größerer Schnelligkeit erfolgt und/oder ein geringer Schwellwert des Betätigungshubes des Leistungsteuerorgans unterschritten wird und/oder die Fahrgeschwindigkeit noch unter einem geringen Schwellwert liegt. Damit bewirkt die Regelschaltung 6 ein sofortiges vollständiges bzw. nahezu vollständiges Öffnen der Kupplung 3, so daß ein mögliches nachfolgendes Bremsmanöver des Fahrers wirkungsvoll vorbereitet bzw. unterstützt wird.

Erst nach Ablauf einer vorgebbaren Verzögerungszeit wird dann die Kupplung 3 erneut in Anpassung an die jeweils erkannte Fahrsituation, in solchen Fällen in der Regel ein gebremster Stillstand bzw. annähernder Stillstand mit Bremsbetätigung oder eine erneute Anfahrsituation bzw. Kriechphase, gesteuert.

## Patentansprüche

1. Automatisch gesteuerte Kupplung (3) zwischen einem mittels willkürlich betätigbaren Steuerorgans steuerbaren Motor (2) und einem ein schaltbares Getriebe aufweisenden Antriebstrang (1,4) eines Kraftfahrzeuges, mit einer Steuerung (6,11), die bei Anfahrsituationen die Kupplung (3) bei vorgegebenen Betriebsparametern weitestgehend öffnet, wobei die Kupplung (3) bei einem zunächst angenäherten Stillstand des Fahrzeuges und Einschaltung eines zum Anfahren geeigneten Ganges bzw. einer anfahrgeeigneten Stufe des Getriebes (4) und nicht betätigter Fahrzeugbremse automatisch zur Übertragung eines geringen, ein Kriechen des Fahrzeuges bewirkenden Drehmomentes schwach geschlossen und bei verstärkter Betätigung des Steuerorgans des Motors (2) stärker bzw. vollständig geschlossen, jedoch bei einem in der Anfahrsituation auftretenden Rückhub des Steuerorgans des Motors (2) sofort vollständig bzw. nahezu vollständig ausgekuppelt wird,
**dadurch gekennzeichnet,**
daß die Kupplung (3) nach dem Rückhub des Steuerorgans erst nach vorgebbarer kurzer Verzögerungszeit wieder in Anpassung an die jeweilige Fahrsituation - z.B. gebremster Stillstand bzw. angenäherter Stillstand mit Bremsbetätigung oder erneute Anfahrsituation bzw. Kriechphase - gesteuert wird.

2. Kupplung nach Anspruch 1,
**dadurch gekennzeichnet,**
daß die Kupplung (3) erst bei Unterschreitung eines Schwellwertes des Hubes des Leistungssteuerorgans und/oder bei schnellem Rückhub des Leistungssteuerorgans vollständig geöffnet wird.

3. Kupplung nach Anspruch 1 oder 2,
**dadurch gekennzeichnet,**
daß die Kupplung (3) nur bei Unterschreitung eines geringen Schwellwertes der Fahrgeschwindigkeit vollständig öffnet.

4. Kupplung nach Anspruch 3,
**dadurch gekennzeichnet,**
daß der Schwellwert von der eingelegten Getriebestufe bzw. von dem eingelegten Gang des Getriebes abhängig ist.

## Claims

1. An automatically controlled clutch (3) between an engine (2) controllable by means of a control organ which can be actuated arbitrarily and a drive train (1,4) of a motor vehicle having a manual transmission with a control device (6, 11) which when starting from rest with predetermined operating parameters opens the clutch (3) as far as possible, the clutch (3) being gently closed automatically to transmit a small torque causing the vehicle to creep when the vehicle is almost at a standstill and a gear suitable for moving off or a stage of transmission (4) suitable for moving off is selected and the driving brake is not actuated, being more strongly or fully closed when the control organ of the engine (2) is operated more strongly, but being fully/almost fully disengaged immediately in the event of a return stroke of the control organ of the engine (2) when starting from rest,
**characterised in that** after the return stroke of the control organ the clutch (3) is again controlled in accordance with the particular driving situation - e.g. braked standstill/near standstill with brake actuation or restart/creep phase - only after a short, pre-determined delay.

2. A clutch according to Claim 1,
**characterised in that** the clutch (3) is not fully opened until the stroke of the power control organ falls below a threshold value and/or until a fast return stroke of the power control organ.

3. A clutch according to Claim 1 or 2,
**characterised in that** the clutch (3) opens fully only when the vehicle speed falls below a low threshold value.

4. A clutch according to Claim 3,
**characterised in that** threshold value is dependent upon the selected transmission stage or the selected gear of the transmission.

## Revendications

1. Embrayage à commande automatique (3), monté entre un moteur (2), susceptible d'être commandé à l'aide d'un organe de commande actionnable à volonté, et un train d'entraînement (1, 4), présentant une transmission commutable, d'un véhicule automobile, avec une commande (6, 11) qui, dans des situations de démarrage, débraye l'embrayage (3) autant que possible pour certains paramètres de fonctionnement, où, lorsque l'on est en état au moins à peu près d'arrêt du véhicule et qu'on enclenche une vitesse appropriée au démarrage ou un rapport de transmission propre au démarrage de la transmission (4) et que le frein du véhicule n'est pas actionné, l'embrayage (3) est faiblement embrayé automatiquement, afin de transmettre un faible couple provoquant un déplacement très lent du véhicule et, en cas- d'actionnement amplifié de l'organe de commande du moteur (2), l'embrayage (3) étant embrayé plus fortement ou complètement, cependant en cas de rappel de l'organe de commande du moteur (2), se produisant dans la situation de démarrage, l'embrayage (3) étant immédiatement complètement ou à peu près complètement débrayé,
**caractérisé en ce que**
l'embrayage (3), après le rappel de l'organe de commande, est ensuite, après expiration d'une temporisation courte, susceptible d'être prédéterminée, commandé en adaptation à la situation de roulage spécifique - par exemple immobilisation avec freinage ou immobilisation pratiquement complète avec actionnement du frein ou nouvelle situation de démarrage ou phase de roulage très lent.

2. Embrayage selon la revendication 1,
**caractérisé en ce que**,
ensuite, l'embrayage (3) est complètement débrayé en cas de descente au-dessous d'une valeur seuil de la course de l'organe de commande de puissance et/ou en cas de rappel rapide de l'organe de commande de puissance.

3. Embrayage selon la revendication 1 ou 2,
**caractérisé en ce que**
l'embrayage (3) est complètement débrayé uniquement en cas de descente au-dessous d'une faible valeur seuil de la vitesse de roulage.

4. Embrayage selon la revendication 3,
**caractérisé en ce que**
la valeur seuil dépend du rapport de transmission passé ou de la vitesse passée de la transmission.
